(19) Europäisches Patentamt

European Patent Office

Office européen des brevets

(11) **EP 0 933 552 B1**

(12) **FASCICULE DE BREVET EUROPEEN**

(45) Date de publication et mention
de la délivrance du brevet:
**21.05.2003 Bulletin 2003/21**

(51) Int Cl.⁷: **F16F 7/09**

(21) Numéro de dépôt: **99400229.3**

(22) Date de dépôt: **02.02.1999**

(54) **Dispositif mécanique à déplacement bimodal**

Mechanische Einrichtung mit zwei Betriebsarten

Mechanical device having two modes of operation

(84) Etats contractants désignés:
**BE DE ES FR GB SE**

(30) Priorité: **02.02.1998 FR 9801149**

(43) Date de publication de la demande:
**04.08.1999 Bulletin 1999/31**

(73) Titulaire: **ETIENNE LACROIX - TOUS ARTIFICES SA**
**31600 Muret (FR)**

(72) Inventeur: **Valembois, Guy**
**31700 Blagnac (FR)**

(74) Mandataire: **Texier, Christian**
**Cabinet Régimbeau**
**20, rue de Chazelles**
**75847 Paris cedex 17 (FR)**

(56) Documents cités:
**EP-A- 0 407 755        BE-A- 548 536**
**DE-A- 2 240 943       FR-A- 1 122 015**
**FR-A- 2 333 165        FR-A- 2 697 881**
**US-A- 2 459 537**

• **SOVIET INVENTIONS ILLUSTRATED Section PQ, Week 8230 Derwent Publications Ltd., London, GB; Class Q63, AN 82-K0470E XP002080223 & SU 868 183 A (PRITCHIN A L), 30 septembre 1981 (1981-09-30)**
• **NASA: "Improved Coulomb-Friction Damper" NTIS TECH NOTES, no. 12, PART F, décembre 1985 (1985-12), page 1424 XP002080222 Springfield, Virginia, USA**

**Description**

La présente invention concerne le domaine des systèmes mécaniques de contrôle de déplacement. Par exemple, un dispositif selon l'invention permet de contrôler un déplacement rapidement accéléré qui pourrait engendrer un problème de fonctionnement ou de sécurité.

Plus particulièrement, mais de façon non limitative, ce dispositif peut être utilisé dans les lanceurs de projectiles à haute impulsion, devant présenter deux dynamiques d'amortissement différentes.

L'invention peut s'appliquer notamment, mais non exclusivement aux amortisseurs à friction du type décrit dans le document FR 2 697 881. Un dispositif amortisseur de ce type comprend une partie fixe, une partie mobile et des moyens de friction intercalés entre la partie fixe et la partie mobile.

Le but de l'invention est d'améliorer la dynamique de l'amortissement. Ce but est atteint grâce à un dispositif mécanique, ayant deux modes de déplacement relatifs d'un ensemble par rapport à un autre, la transition entre ces deux modes étant contrôlée et déterminée par le profil temporel du déplacement relatif.

Plus précisément, le but de l'invention est de proposer un dispositif mécanique qui permet de gérer la réponse à une sollicitation extérieure en fonction de l'amplitude de l'impulsion générée :

- si la sollicitation extérieure génère une impulsion faible (inférieure à un seuil pré-établi), le système doit rester dans le premier mode de déplacement relatif, c'est-à-dire avec déplacement libre,
- si la sollicitation extérieure génère une impulsion forte (supérieure à un seuil pré-établi) le système doit transiter vers le second mode de déplacement relatif, c'est-à-dire avec amortissement ou blocage.

Ce but est atteint dans le cadre de la présente invention, grâce à un dispositif mécanique pour le contrôle de la transition entre deux modes de déplacement relatifs, entre deux objets, comprenant :

- deux ensembles susceptibles de translation relative guidée, l'un dit fixe, l'autre mobile,

  caractérisé en ce qu'il comprend en outre,

- des moyens de commande élastiques intercalés entre les deux ensembles avec un jeu contrôlé pour définir le mode de déplacement relatif, et
- une masse inertielle associée à l'un des ensembles et adaptée pour sélectivement agir sur les moyens de commande, en fonction du profil temporel de déplacement de l'ensemble mobile, pour modifier le jeu et le mode de déplacement relatif.

D'autres caractéristiques, buts et avantages de la présente invention apparaîtront à la lecture de la description détaillée qui suit et en regard des dessins annexés, donnés à titre d'exemples non limitatifs et sur lesquels :

- la figure 1 représente schématiquement en coupe médiane un modèle heuristique du dispositif selon l'invention,
- la figure 2 représente schématiquement les déplacements relatifs auxquels sont soumis la masse inertielle et l'ensemble mobile du dispositif selon l'invention sous l'effet d'une impulsion,
- la figure 3 représente le profil du déplacement relatif de l'ensemble mobile par rapport à l'ensemble fixe dans un dispositif selon l'invention sous l'effet d'un type particulier d'impulsion, qui sera décrit ci-dessous. La figure 3a représente en particulier la vitesse de l'élément mobile en fonction du temps et la fibure 3b représente l'accélération de cet ensemble mobile en fonction du temps,
- la figure 4 représente le déplacement relatif δ de la masse mobile par rapport à l'ensemble mobile, en fonction du temps,
- la figure 5 représente schématiquement en coupe médiane un modèle particulier mais non limitatif de réalisation du dispositif selon l'invention,
- la figure 6 représente schématiquement en coupe médiane un autre modèle particulier mais non limitatif de réalisation du dispositif selon l'invention.

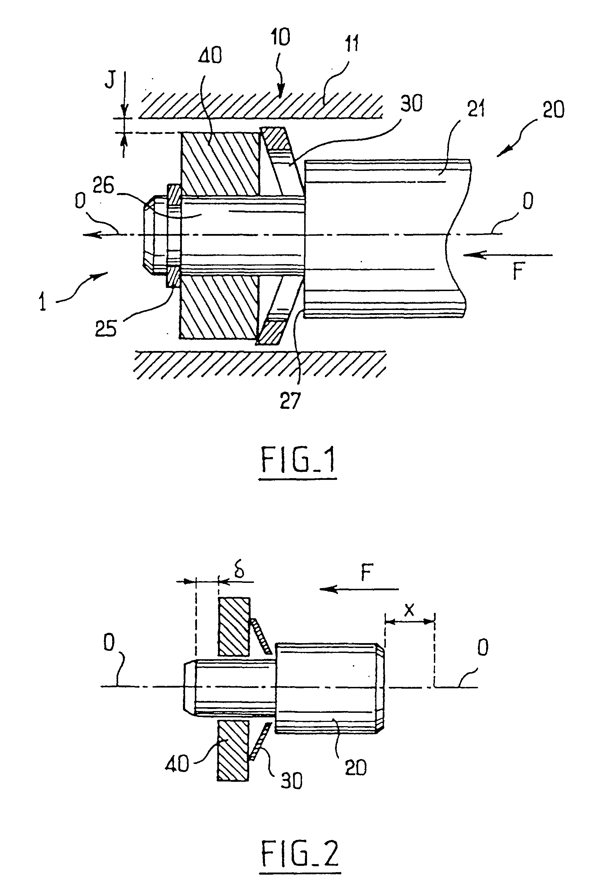

On a présenté sur la figure 1, un schéma auquel on va faire référence pour décrire le dispositif mécanique 1 selon l'invention. Sont représentés sur ce schéma, un ensemble fixe 10, un ensemble mobile 20, des moyens de commande élastiques 30 et une masse inertielle 40.

L'ensemble fixe 10 comprend par exemple, un cylindre fixe 11 creux de révolution.

L'ensemble mobile 20 comprend un cylindre mobile 21 de révolution, plein, de diamètre externe inférieur au diamètre interne du cylindre fixe 11, de manière à autoriser un mouvement libre axial selon O-O, à l'intérieur de celui-ci. Ce cylindre mobile 21 est muni d'une partie rétrécie 26, en diamètre, aussi cylindrique et coaxiale. La partie rétrécie 26 est limitée du côté opposé à son extrémité libre par une butée 27. Des moyens de commande élastiques 30 et la masse inertielle 40 sont enfilés sur la partie rétrécie 26. Les moyens de commande élastiques 30 sont intercalés entre la masse 40 et la butée 27. Ces moyens de commande élastiques 30 et la masse 40 sont maintenus sur la partie rétrécie 26 de l'ensemble mobile 20 par un élément de fixation 25. Par exemple, cet élément de fixation 25 est un clip ou une rondelle fendue.

La masse inertielle 40 est un cylindre creux de révolution, de diamètre externe inférieur au diamètre interne du cylindre 11 de l'ensemble fixe 10, de manière à autoriser un mouvement libre axial, à l'intérieur de celui-ci. Cette masse inertielle 40 est portée par l'ensemble mobile 20, son diamètre interne étant légèrement supérieur au diamètre externe de la partie rétrécie 26 du cylindre mobile 21, de manière à autoriser un mouvement libre axial sur celui-ci.

Des moyens de commande élastiques 30 sont ici une rondelle élastique, par exemple de type Siam-Ringspann. Un jeu J est ménagé, au repos, entre les moyens de commande élastiques 30 et l'ensemble fixe 10.

Le principe de fonctionnement du dispositif qui vient d'être décrit est essentiellement le suivant.

Si la sollicitation extérieure transmet à l'ensemble mobile 20 une impulsion de faible amplitude, selon un axe O-O, dans le sens indiqué par la flèche F, le déplacement de l'ensemble mobile 1 est transmis à la masse 40 sans que les moyens de commande élastiques 30 ne se déforment suffisamment pour éliminer le jeu J. Le cylindre 21 de l'ensemble mobile 20 se déplace alors librement, à l'intérieur du cylindre 11 de l'ensemble fixe 10. Le dispositif selon l'invention reste dans un premier mode de déplacement relatif.

Par contre, si l'ensemble mobile 20. subit une impulsion relativement forte, selon l'axe O-O, dans le sens indiqué par la flèche F, le déplacement de l'ensemble mobile 20 est transmis à la masse inertielle 40, par l'intermédiaire des moyens de commande élastiques 30. Cependant, la masse 40 s'oppose à ce mouvement. Les moyens de commande élastiques 30 s'écrasent et se détendent radialement supprimant le jeu J. Les moyens de commande élastiques 30 entrent alors en contact avec la paroi du cylindre 11. Le dispositif selon l'invention transite vers un deuxième mode de déplacement relatif. Ce deuxième mode de déplacement relatif est généralement amorti mais on peut aussi chercher à le bloquer.

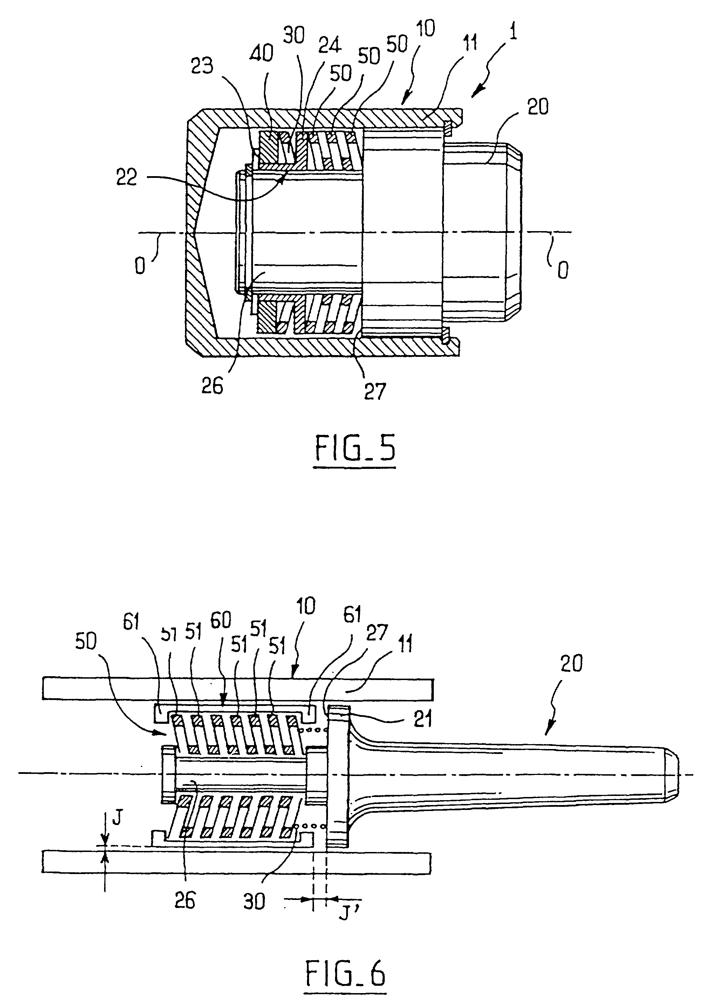

Les moyens de commande élastiques 30 peuvent, en fonction de leur nature, agir directement sur la paroi du cylindre 11 pour amortir ou bloquer le déplacement, dans le deuxième mode de déplacement relatif entre l'ensemble fixe 10 et l'ensemble mobile 20. Mais dans un mode de réalisation préférentiel du dispositif selon l'invention, des moyens de friction ou de blocage sont intercalés entre les moyens de commande élastiques 30 et la paroi du cylindre 11. Un exemple de moyens de friction 60 sera décrit plus loin (voir figure 6). La nature du deuxième mode de déplacement relatif est déterminée par le type de moyens de commande élastiques 30 utilisé. Ceux-ci amortissent ou bloquent le déplacement relatif entre les ensembles fixe 10 et mobile 20 selon qu'ils sont dimensionnés pour travailler en flambage ou pour s'arc-bouter. S'ils sont conçus pour flamber, un effort de friction limite est rapidement atteint pour rester à peu près constant sur le reste du déplacement. Le flambage peut dont être utilisé comme :

- moyen de commande de la transition ; et comme
- moyen de pression pour l'amortissement.

Ces deux fonctions peuvent être dissociées ou confondues (figure 6).

Si au contraire, les moyens de commande élastiques 30 sont conçus pour s'arc-bouter, l'effort de friction augmente rapidement et continûment, jusqu'à une valeur limite, lorsque le, déplacement relatif des deux ensembles augmente. Au-delà de cette valeur limite, les forces de frottement sont suffisamment fortes pour bloquer le déplacement relatif.

Dans ce dernier cas, les moyens de commande élastiques peuvent aussi être conçus pour céder au-dessus d'un effort seuil prédéterminé, au-delà duquel le dispositif comportant le dispositif mécanique 1 est susceptible d'être endommagé. Ils agissent alors comme moyen de sécurité, en cas d'effort excessif. Ce moyen de sécurité peut aussi être étudié pour qu'ayant cédé une fois à un effort excessif, un nouvel emploi du dispositif comportant le dispositif mécanique 1, selon l'invention, soit interdit tel quel.

On peut donc constater que le dispositif mécanique, selon l'invention, permet une transition essentiellement entre un mode de déplacement libre ou un mode de déplacement amorti ou à la limite bloqué. Cette transition dépend de la dynamique de l'ensemble masse inertielle 40, moyens de commande élastiques 30. Le réglage de cette dynamique permet d'obtenir une transition entre les deux modes de déplacement relatifs, pour des profils temporels de déplacement voulus.

De nombreuses variantes du dispositif mécanique 1, selon l'invention, peuvent fonctionner selon le principe décrit ci-dessus.

A titre indicatif, nous développons ci-dessous un calcul des valeurs de la masse m de la masse inertielle 40 et de la raideur mécanique k d'une rondelle élastique de moyens de commande élastiques 30 permettant d'obtenir la transition souhaitée, dans le cas d'un déplacement amorti.

La figure 2 supporte la description de la modélisation de la dynamique du dispositif mécanique 1, selon l'invention. Sous l'effet d'une impulsion, l'ensemble mobile se déplace d'une distance x dans le sens F par rapport à l'ensemble fixe 10 et d'une distance $\delta$ par rapport à la masse inertielle 40.

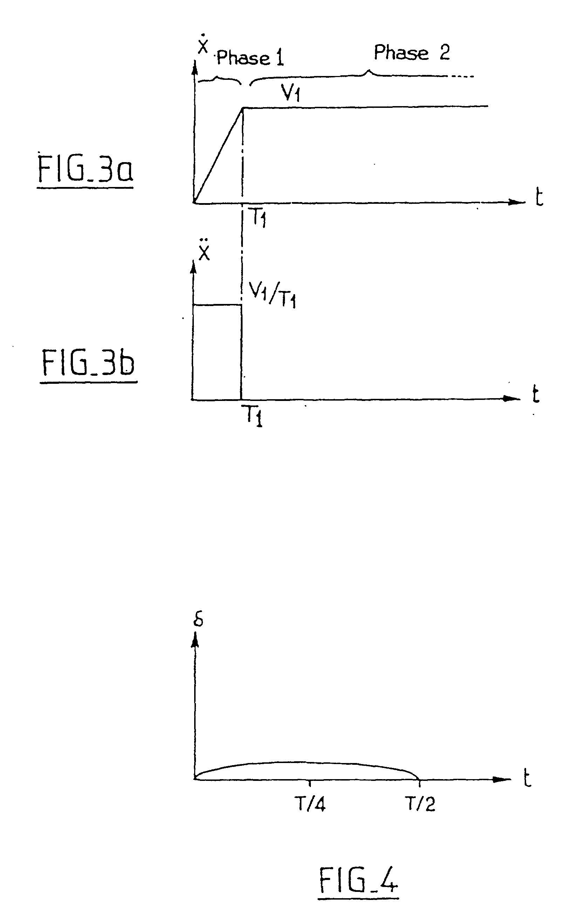

La transition de déplacement se fait au temps $T_1$ après l'instant initial de l'impulsion (fig. 3). On a un premier mode de déplacement avant $T_1$, pendant une phase 1, au cours de laquelle l'ensemble mobile 20 est accéléré et un deuxième mode de déplacement après $T_1$, qui correspond à une deuxième phase de déplacement, au cours de laquelle le déplacement de l'ensemble mobile 20 est amorti, à vitesse constante.

L'équation différentielle du mouvement de la masse 40 m est alors

$$m\left(\ddot{x} - \ddot{\delta}\right) - k\delta = 0$$
$$(\text{équation I})$$

soit en posant :

$$\omega^2 = \frac{k}{m}$$

$$\ddot{\delta} + \omega^2 \delta = \frac{V_1}{T_1}$$

(équation II), où $V_1$ est la vitesse d'attaque.

Donc les conditions initiales sont au temps t = 0 :

$$\delta = \dot{\delta} = 0$$

L'équation II a alors pour solution générale :
$\delta(t) = A \sin \omega t + B \cos \omega t$, où A et B sont à déterminer,
et pour solution particulière :

$$\delta(t) = \frac{V_1}{T1.\omega^2}$$

On obtient donc la solution complète :

$$\delta(t) = A \sin \omega t + B \cos \omega t + \frac{V_1}{T_1.\omega^2}$$

En exploitant les conditions initiales, il vient :

$$\delta(0) = B + \frac{V_1}{T_1.\omega^2} = 0$$

et

$$\dot{\delta}(0) = A\omega = 0$$

d'où A = 0 et

$$B = - \frac{V_1}{T_1.\omega^2}$$

ce qui donne

$$\delta(t) = \frac{V_1}{T_1.\omega^2}.(1\text{-}\cos \omega t)$$

Comme t reste inférieur à la valeur $T_1$, qui est elle-même infiniment petite, un développement limité de l'expression ci-avant permet d'obtenir une expression simple de l'équation de mouvement.

$$\delta(t) = \frac{V_1.t}{2}$$

Soit en fin de phase 1

$$\delta(T_1) = \frac{V_1.T_1}{2}$$

et

$$\dot{\delta}(T_1) = \frac{V_1}{2}$$

Comme $\delta$ est infiniment petit, on l'assimilera en début de la phase 2 à 0.

Les nouvelles conditions initiales sont donc pour t = 0

$$\delta = 0 \text{ et } \dot{\delta}(T_1) = \frac{V_1}{2}$$

L'équation différentielle est modifiée :

$$\ddot{\delta} + \omega^2.\delta = 0$$

Elle a pour solution générale

$$\delta(t) = C \sin \omega t + D \cos \omega t$$

En exploitant les conditions initiales, il vient

$$\delta = 0 \qquad \text{d'où } D = 0$$

$$\dot{\delta} = \frac{V_1}{2} \text{ d'où } C = \frac{V_1}{2\omega}$$

Donc

$$\delta(t) = \frac{V_1}{2\omega}.\sin\omega t$$

Ce déplacement relatif δ de la masse 40 m par rapport à l'ensemble mobile 20, en fonction du temps, est représenté sur la figure 4. On peut y voir que le déplacement relatif δ maximum est obtenu pour le quart de la période, soit pour une valeur du temps

$$t = \frac{T}{4} = \frac{\pi}{2.\omega}$$

Pendant ce temps, le déplacement axial x de l'ensemble mobile 20 par rapport à l'ensemble fixe 10 est limité à

$$x = X = V_1.t = \frac{V_1.\pi}{2.\omega}$$

d'où à la limite de la transition :

$$\omega = \frac{\pi.V_1}{2.X}$$

et

$$\delta = \frac{X}{\pi}.\sin \omega$$

soit un déplacement relatif δ maximum :

$$\delta_{maxi} = \frac{X}{\pi}$$

Par exemple, si on veut limiter la vitesse d'attaque $V_1$ = 1 m/s et le déplacement axial x pendant la phase 1, à X = 1 mm, le calcul donne ω = 1571 rds/s, soit k/m = 2 464,9 kN/m kg.

Donc si on choisit des constantes de raideur k de 50 N/mm, 100 N/mm, 200 N/mm, il faut respectivement des masses de 20, 40 et 80 g. Ce choix des constantes de raideur n'e'st pas limitatif. D'autre part, pour ce rapport k/m, le déplacement relatif δ maximal est $\delta_{maxi}$ = 0,3 mm.

Le jeu J prévisible pour un bon fonctionnement sera de l'ordre de 0,05 mm. La géométrie des moyens élastiques 30 permet alors de choisir le jeu J. On pourra, par exemple, utiliser des rondelles Siam-Ringspann standard (réf. A 10 SS 20).

Le dispositif mécanique 1, selon l'invention peut être amélioré grâce à diverses variantes. Quelques unes de ces variantes sont présentées ci-dessous, mais elles ne sont en aucun cas limitatives.

Il a déjà été décrit ci-dessus un dispositif mécanique 1 amortissant le déplacement relatif des deux ensembles 10, 20 grâce au flambage des moyens de commande élastiques 30. Le dispositif selon l'invention peut comporter différents types de moyens amortisseurs conçus pour amortir le déplacement relatif des deux ensembles 10 et 20. Par exemple, les moyens amortisseurs peuvent être avantageusement constitués par des moyens de commande élastiques 30, comprenant au moins une rondelle travaillant au flambage, complétés par des moyens de friction 60 conformes à ceux décrits dans la demande de brevet français FR 2 697 881.

Nous avons vu aussi que le dispositif mécanique 1, selon l'invention, peut comprendre des moyens de blocage conçus pour bloquer le déplacement relatif des deux ensembles 10, 20 si les forces de frottement des moyens de friction sur l'ensemble fixe 10 augmentent au-delà d'une valeur limite. Ces moyens de blocage peuvent alors comprendre au moins une rondelle rigide dans la direction radiale, travaillant en arc-boutement. Cette dernière peut ou non céder et libérer le déplacement relatif si l'effort imposant ce déplacement est supérieur à un seuil prédéterminé.

Comme nous l'avons vu, un dispositif mécanique 1, selon l'invention, peut avoir des moyens de commande élastiques 30 qui comprennent au moins une rondelle élastique intercalée entre l'ensemble mobile 20 et la masse inertielle 40. Cependant, les moyens de commande élastiques 30 peuvent aussi comprendre un ressort, par exemple hélicoïdal, intercalé entre une rondelle ou un ensemble de rondelles et la butée 27 de l'ensemble mobile 20.

Le dispositif mécanique 1, selon l'invention, peut aussi avoir sa masse inertielle 40 placée sur une pièce intermédiaire 22, associée à l'ensemble mobile 20 et mobile sur ladite pièce intermédiaire 22. Cette variante du dispositif mécanique 1 est représentée sur la figure 5. La pièce intermédiaire 22 comporte par exemple un anneau 23, circonférentiel à la partie rétrécie 26 de l'ensemble mobile 20, mais avec un jeu suffisant pour être mobile sur celui-ci. Sur l'anneau 23 s'étend radialement un épaulement 24, situé sur le bord de l'anneau 23, opposé à l'extrémité libre de l'ensemble mobile 20 engagée dans l'ensemble fixe 10. Cet épaulement peut prendre une forme circulaire continue ou comprendre plusieurs éléments faisant saillie sur l'anneau 23 et répartis autour de celui-ci. L'épaulement 24 a un encombrement circonférentiel externe inférieur au diamètre interne du cylindre 11 de l'ensemble fixe 10, de manière à ce que la pièce intermédiaire 22 soit libre de mouvement en translation selon l'axe O-O, par rapport à l'ensemble fixe 10.

La masse inertielle 40 est alors placée autour de l'anneau 23, de manière à être libre en translation selon l'axe O-O sur l'anneau 23. On place alors des moyens de commande élastiques 30 entre la masse mobile 40 et l'épaulement 24 et des moyens de ressort 50 entre la pièce intermédiaire 22 et la butée 27 limitant la partie rétrécie 26 du côté opposé à l'extrémité libre de l'ensemble mobile 20, engagée dans le cylindre 11.

Dans un mode de réalisation avantageux du dispositif selon l'invention, les moyens de commande élastiques 30 peuvent être constitués d'une rondelle élastique unique et les moyens de ressort 50 d'un ensemble de rondelles élastiques susceptibles de flamber. De cette manière, la dynamique du déplacement est liée à une seule rondelle, qui est placée entre la masse mobile 40 et l'épaulement 24, tandis que l'effort axial de ressort est transmis à toutes les autres rondelles, situées entre la pièce intermédiaire 22 et la butée 27. La rondelle élastique unique constituant les moyens de commande élastiques 30 peut avoir une constante de raideur plus faible que chaque rondelle dont l'ensemble constitue les moyens de ressort 50. Ainsi la rondelle élastique unique subit plus facilement une déformation sous l'effet de l'impulsion. En s'étendant radialement, ladite rondelle élastique unique vient en frottement sur la paroi interne du cylindre fixe 11, renforçant l'effet d'inertie. L'ensemble des rondelles élastiques des moyens de ressort 50 est alors sollicité. Les rondelles de cet ensemble s'écrasent ; leur extrémité circonférentielle externe vient au contact de la paroi interne du cylindre 11 ; elles flambent ; et il en résulte une friction amortissant l'impulsion. La raideur des rondelles constituant cet ensemble peut être choisie élevée afin de maximiser les efforts de friction. Donc la raideur de la rondelle élastique des moyens de commande élastiques 30 est choisie pour optimiser le déclenchement de la transition entre les deux modes de déplacement relatif entre l'ensemble fixe 10 et l'ensemble mobile 20, tandis que la raideur des rondelles des moyens de ressort 50 est choisie pour optimiser l'amortissement dudit déplacement relatif.

On peut envisager, dans une autre .variante du dispositif selon l'invention, de remplacer une, plusieurs, voire la totalité des rondelles des moyens de ressort 50 susceptibles de flamber par une ou plusieurs rondelles rigides susceptibles de s'arc-bouter entre l'ensemble fixe 10 et l'ensemble mobile 20, lorsqu'elles sont sollicitées.

Avantageusement et pour optimiser la friction d'amortissement ou le blocage, le dispositif mécanique 1 peut comprendre des moyens de frottement, entre l'ensemble fixe 10 et l'ensemble mobile 20 (figure 6).

Par exemple, un patin 60 peut être placé entre le cylindre 11 de l'ensemble fixe 10 et les moyens de commande élastiques 30. Dans ce cas, le patin 60 peut être une douille de révolution, fendue longitudinalement, de diamètre externe inférieur du jeu radial J, au diamètre interne du cylindre 11. Chaque bord transversal du patin 60 comprend un épaulement 61, qui s'étend radialement du patin 60 vers la partie rétrécie 26.

Dans ce même dispositif mécanique, des moyens de ressort 50 sont constitués de rondelles élastiques 51 de diamètre externe au repos approximativement égal ou légèrement inférieur au diamètre interne du patin 60. Le diamètre interne de ces rondelles 51 est légèrement supérieur à celui de la partie rétrécie 26. Le rayon des rondelles 51 parallèle à leur surface principale, fait un angle de 5 à 10° par rapport au plan perpendiculaire à l'axe O-O.

L'ensemble patin 60 - moyens de ressort 50 peut avoir une masse adaptée pour constituer en même temps la masse inertielle 40.

Les moyens de commande élastiques 30, ici constitués d'un ressort spiral, sont situés entre l'ensemble mobile 20 et les moyens de ressort 50.

Au repos, un jeu axial J' est ménagé entre l'épaulement 61, situé du côté du bord du patin opposé à l'extrémité libre de l'ensemble mobile 20 et la butée 27. L'effet technique de ce jeu J' a déjà été décrit par exemple dans la demande de brevet français FR 2 697 881.

Nous avons décrit ci-dessus des dispositifs dans lesquels l'ensemble mobile 20 coulisse dans l'ensemble fixe 10, l'amortissement ou le blocage s'effectuant sur la surface interne du cylindre 11. Mais, des dispositifs conformes à l'invention peuvent être conçus de telle manière que les frottements s'effectuent sur une partie de l'ensemble mobile. On peut aussi concevoir que le cylindre 21 soit fixe et que ce soit le cylindre 11 qui soit mobile.

Les dispositifs selon l'invention décrits ci-dessus peuvent aussi être compris dans des systèmes mécaniques de contrôle de déplacement plus complexes. Dans ce cas, un dispositif selon l'invention peut être placé en série ou en parallèle avec au moins un amortisseur ou un système de blocage de quelque nature que ce soit. Ceci permet d'obtenir des transitions entre déplacement amorti et déplacement libre, et réciproquement, entre deux déplacements amortis de caractéristiques différentes, ou encore une transition d'un déplacement amorti à un blocage et réciproquement, voire même une transition entre état bloqué et déplacement libre ou réciproquement.

## Revendications

**1.** Dispositif mécanique (1) pour le contrôle de la transition entre deux modes de déplacement relatif entre deux objets comprenant :

- deux ensembles (10, 20) susceptibles de translation relative guidée, l'un dit fixe (10), l'autre mobile (20),

  **caractérisé en ce qu'**il comprend en outre

- des moyens de commande élastiques (30) intercalés entre les deux ensembles (10, 20) avec un jeu contrôlé J pour définir le mode de déplacement relatif, et
- une masse inertielle (40) associée à l'un des ensembles (20) et adaptée pour sélectivement agir sur les moyens de commande (30), en fonction du profil temporel de déplacement de l'ensemble mobile (20) pour modifier le jeu et le mode de déplacement relatif.

2. Dispositif selon la revendication 1, **caractérisé en ce que** les moyens de commande élastiques (30) sont dimensionnés pour travailler en flambage.

3. Dispositif selon l'une quelconque des revendications 1 ou 2, **caractérisé en ce qu'**il comprend des moyens amortisseurs conçus pour amortir le déplacement relatif des deux ensembles (10, 20).

4. Dispositif selon la revendication 3; **caractérisé en ce que** les moyens amortisseurs comprennent au moins une rondelle travaillant au flambage.

5. Dispositif selon l'une des revendications précédentes, **caractérisé en ce qu'**il comprend des moyens de friction (60) entre l'ensemble fixe (10) et l'ensemble mobile (20).

6. Dispositif selon l'une des revendications précédentes, **caractérisé en ce qu'**il comprend en outre des moyens de blocage du déplacement relatif des deux ensembles (10, 20) si l'effort de friction augmente au-delà d'une valeur limite.

7. Dispositif selon la revendication 6, **caractérisé en ce que** les moyens de blocage comprennent au moins une rondelle rigide dans sa direction radiale travaillant en arc-boutement.

8. Dispositif selon la revendication 7, **caractérisé en ce que** la rondelle rigide dans la direction radiale est conçue pour céder et libérer le déplacement relatif si l'effort imposant ce déplacement est supérieur à un seuil prédéterminé.

9. Dispositif selon l'une quelconque des revendications précédentes, **caractérisé en ce que** les moyens de commande élastiques comprennent au moins une rondelle élastique (30) intercalée entre l'ensemble mobile (20) et la masse inertielle (40).

10. Dispositif selon l'une quelconque des revendications précédentes, **caractérisé en ce que** la masse inertielle est placée sur une pièce intermédiaire (22) associée à l'ensemble mobile (20).

11. Dispositif selon la revendication 9, **caractérisé en ce que** des moyens de ressort (50) sont placés entre la pièce intermédiaire (22) et l'ensemble mobile (20).

12. Dispositif selon l'une quelconque des revendications précédentes, **caractérisé en ce qu'**au moins un patin de friction (60) est placé entre le cylindre (11) de l'ensemble fixe (10) et les moyens de commande élastiques (30).

13. Utilisation du dispositif selon l'une quelconque des revendications précédentes, dans des systèmes mécaniques pour contrôler un déplacement accéléré.

14. Utilisation du dispositif selon l'une quelconque des revendications précédentes, dans des lanceurs de projectiles à haute impulsion.

15. Système mécanique de contrôle de déplacement **caractérisé par le fait qu'**il comprend un dispositif selon l'une quelconque des revendications précédentes, placé en parallèle ou en série avec au moins un amortisseur ou des moyens de blocage de quelque nature que ce soit.

**Patentansprüche**

1. Mechanische Vorrichtung (1) zum Steuern des Übergangs zwischen zwei Betriebsarten der relativen Versetzung zwischen zwei Gegenständen, mit den folgenden Merkmalen:

   - zwei Anordnungen (10, 20), die zur relativen, geführten Translation befähigt sind, von denen die eine fest (10), die andere beweglich (20) genannt ist,

   **dadurch gekennzeichnet, daß** sie außerdem die folgenden Merkmale aufweist:

   - elastische Steuermittel (30), die mit einem Steuerspiel J zwischen den beiden Anordnungen (10, 20) eingefügt sind, um die Art der relativen Versetzung zu definieren, und
   - eine träge Masse (40), die einer der Anordnungen (20) zugeordnet ist und dazu eingerichtet ist, auf die Steuermittel (30) selektiv in Funktion des zeitlichen Profils der Versetzung der beweglichen Anordnung (20) einzuwirken, um das Spiel und die Art der relativen Versetzung zu ändern.

2. Vorrichtung nach Anspruch 1, **dadurch gekennzeichnet, daß** die elastischen Steuermittel (30) so bemessen sind, daß sie umknickend arbeiten.

3. Vorrichtung nach irgendeinem der Ansprüche 1 oder 2, **dadurch gekennzeichnet, daß** sie Dämpfungsmittel aufweist, die dazu konzipiert sind, die relative Versetzung der beiden Anordnungen (10, 20) zu dämpfen.

**4.** Vorrichtung nach Anspruch 3, **dadurch gekennzeichnet, daß** die Dämpfungsmittel mindestens eine Scheibe aufweisen, die beim Umknicken wirksam wird.

**5.** Vorrichtung nach einem der vorangehenden Ansprüche, **dadurch gekennzeichnet, daß** sie Reibungsmittel (60) zwischen der festen Anordnung (10) und der beweglichen Anordnung (20) aufweist.

**6.** Vorrichtung nach einem der vorangehenden Ansprüche, **dadurch gekennzeichnet, daß** sie außerdem Mittel zum Sperren der relativen Versetzung der beiden Anordnungen (10, 20) aufweist, wenn die Reibungskraft über einen Grenzwert hinaus zunimmt.

**7.** Vorrichtung nach Anspruch 6, **dadurch gekennzeichnet, daß** die Mittel zum Sperren mindestens eine Scheibe aufweisen, die in radialer Richtung steif ist und verspreizend arbeitet.

**8.** Vorrichtung nach Anspruch 7, **dadurch gekennzeichnet, daß** die in radialer Richtung steife Scheibe dazu konzipiert ist, nachzugeben und die relative Versetzung freizugeben, wenn die Kraft, die diese Versetzung hervorruft, größer ist als ein bestimmter Schwellenwert.

**9.** Vorrichtung nach irgendeinem der vorangehenden Ansprüche, **dadurch gekennzeichnet, daß** die elastischen Steuermittel mindestens eine elastische Scheibe (30) aufweisen, die zwischen der beweglichen Anordnung (20) und der trägen Masse (40) eingesetzt ist.

**10.** Vorrichtung nach irgendeinem der vorangehenden Ansprüche, **dadurch gekennzeichnet, daß** die träge Masse auf einem Zwischenstück (22) angeordnet ist, das der beweglichen Anordnung (20) zugeordnet ist.

**11.** Vorrichtung nach Anspruch 9, **dadurch gekennzeichnet, daß** Federmittel (50) zwischen dem Zwischenstück (22) und der beweglichen Anordnung (20) angeordnet sind.

**12.** Vorrichtung nach irgendeinem der vorangehenden Ansprüche, **dadurch gekennzeichnet, daß** mindestens ein Reibungsklotz (60) zwischen dem Zylinder (11) der festen Anordnung (10) und den elastischen Steuermitteln (30) angeordnet sind.

**13.** Verwendung der Vorrichtung nach irgendeinem der vorangehenden Ansprüche in mechanischen Systemen zum Steuern einer beschleunigten Versetzung.

**14.** Verwendung der Vorrichtung nach irgendeinem der vorangehenden Ansprüche in Abschußeinrichtungen für Projektile mit hoher Wucht.

**15.** Mechanisches System zum Steuern von Versetzung, **dadurch gekennzeichnet, daß** es eine Vorrichtung nach irgendeinem der vorangehenden Ansprüche aufweist, die parallel oder in Reihe mit mindestens einem Dämpfer oder mit Mitteln zum Sperren irgendeiner beliebigen Art angeordnet ist.

**Claims**

**1.** A mechanical device (1) for controlling changeover between two modes of relative displacement between two objects comprising:

· two assemblies (10, 20) capable of moving in guided relative translation, one assembly being said to be fixed (10), and the other being said to be moving (20),

the device being **characterized in that** it further comprises:

· resilient control means (30) interposed between the two assemblies (10, 20) with controlled clearance (J) to define the mode of relative displacement; and
· an inertial mass (40) associated with one of the assemblies (20) and adapted to act selectively on the control means (30) as a function of the time profile of moving assembly displacement in order to modify the clearance and the mode of relative displacement.

**2.** A device according to claim 1, **characterized in that** the resilient control means (30) are dimensioned to operate in buckling.

**3.** A device according to claim 1 or 2, **characterized in that** it includes damper means designed to damp relative displacement between the two assemblies (10, 20).

**4.** A device according to claim 3, **characterized in that** the damper means comprise at least one washer operating in buckling.

**5.** A device according to any preceding claim, **characterized in that** it includes friction means (60) between the fixed assembly (10) and the moving assembly (20).

**6.** A device according to any preceding claim, **characterized in that** it further comprises blocking means for blocking relative displacement between the two assemblies (10, 20) if the friction force increases beyond a limit value.

7. A device according to claim 6, **characterized in that** the blocking means comprise at lest one washer that is rigid in its radial direction and that operates in wedging.

8. A device according to claim 7, **characterized in that** the washer that is rigid in the radial direction is designed to give way and release relative displacement if the force imparting said displacement is greater than a predetermined threshold.

9. A device according to any preceding claim, **characterized in that** the resilient control means comprise at least one resilient washer (30) interposed between the moving assembly (20) and the inertial mass (40).

10. A device according to any preceding claim, **characterized in that** the inertial mass is placed on an intermediate piece (22) associated with the moving assembly (20).

11. A device according to claim 9, **characterized in that** spring means (50) are placed between the intermediate piece (22) and the moving assembly (20).

12. A device according to any preceding claim, **characterized in that** at least one friction shoe (60) is placed between the cylinder (11) of the fixed assembly (10) and the resilient control means (30).

13. The use of the device according to any preceding claim, in mechanical systems for controlling accelerated displacement.

14. The use of a device according to any preceding claim, in a high-impulse projectile launcher.

15. A mechanical system for controlling displacement, **characterized by** the fact that it comprises a device according to any preceding claim placed in series or in parallel with at least one shock absorber or blocking means of any kind whatsoever.

$\underline{\text{FIG.1}}$

$\underline{\text{FIG.2}}$

FIG.3a

FIG.3b

FIG.4

FIG_5

FIG_6